# EUROPEAN PATENT SPECIFICATION

(11) **EP 2 623 286 B1**
(45) Date of publication and mention of the grant of the patent: **18.07.2018**
(21) Application number: 11829510.4
(22) Date of filing: 21.09.2011
(51) Int. Cl.: B29C 33/42, B29C 33/00, B41M 1/12, B29C 33/30

(54) **MOLD FOR FORMING THREE-DIMENSIONAL PATTERN AND METHOD FOR MANUFACTURING AN EXTERIOR MATERIAL FOR HOME APPLIANCE**
FORM ZUR BILDUNG EINER DREIDIMENSIONALEN STRUKTUR UND VERFAHREN ZUR HERSTELLUNG EINES AUSSENTEILS FÜR EIN HAUSHALTSGERÄT
MOULE DESTINÉ À FORMER UN MOTIF TRIDIMENSIONNEL ET PROCÉDÉ DE FABRICATION D'UNE PIECE EXTERIEURE D'APPAREIL MÉNAGER

(30) Priority: 27.09.2010 KR 20100093028
(43) Date of publication of application: 07.08.2013
(73) Proprietor: LG Hausys, Ltd., Seoul 150-721 (KR)
(72) Inventor: YANG, In-Suk, Ulsan 681-814 (KR); LEE, Jong-Chul, Cheongju-si Chungcheongbuk-do 361-775 (KR); LEE, Jae-Eun, Seoul 139-896 (KR)
(74) Representative: Zacco Denmark A/S
(86) International application number: PCT/KR2011/006962
(87) International publication number: WO 2012/044004

(56) References cited:
- CN-A- 101 439 573
- JP-A- H0 550 413
- JP-A- H0 550 413
- JP-A- H11 333 865
- KR-A- 20060 105 155
- KR-A- 20080 070 345
- US-B1- 6 248 271

## Description

### [Technical Field]

The present invention relates to a technology for manufacturing an exterior material for a home appliance, and more particularly, to a mold for forming a three-dimensional pattern such as an embossed pattern on a surface of a home appliance and the like, and a method for manufacturing an exterior material for home appliance using the same.

### [Background Art]

Three-dimensional molding is well known in the prior art. Three examples are: CN101439573, which describes an integrated injection mold of a glass partition, which can precisely put glass into a mold for injection molding; JP5050413, which describes a cement inorganic board having a pattern surface; or US 6248271, which describes a method of molding roofing shingles including the steps of providing a compression mold having two mold bodies.

When forming a three-dimensional pattern such as an embossed pattern on a surface of artificial marble or an exterior material for a home appliance, a pattern transfer method is performed using a mold.

In the pattern transfer method, a three-dimensional pattern opposite to a pattern to be formed is formed on an inner surface of a mold such that the three-dimensional pattern can be transferred to a surface of a molded article manufactured in a mold.

In the art, a glass mold is mainly used. A glass mold entails less deformation and thus can be easily reused.

However, it is difficult to form a precise embossed pattern using a glass mold, and it is not easy to release the mold after formation of a molded article.

### [Disclosure]

### [Technical Problem]

An aspect of the present invention is to provide a mold for manufacturing a three-dimensional pattern which can easily provide a molded article with a three-dimensional pattern such as an embossed pattern and can minimize deformation.

Another aspect of the present invention is to provide a method for manufacturing an exterior material for a home appliance, which allows a three-dimensional pattern to be easily formed on a surface of a material using the mold for forming a three-dimensional pattern.

### [Technical Solution]

In accordance with one aspect of the present invention, a mold for forming a three-dimensional pattern includes: a mold section having a three-dimensional pattern formed on a molding surface thereof to provide a surface shape of a molded article; and a frame section attached to an outer surface of the mold section to reinforce the mold section, wherein said frame section is formed of glass or a metal honeycomb panel. The mold section may be formed of at least one material of metal, Teflon and rubbers.

In accordance with an embodiment not falling under the scope of the present claims, a mold for forming a three-dimensional pattern has a three-dimensional pattern on a molding surface thereof to provide a surface shape of a molded article and is formed of a metallic material having a thickness of 3 mm to 20 mm.

In accordance with a further embodiment not falling under the scope of the present claims, a mold for forming a three-dimensional pattern includes: upper and lower molds each having a molding surface, wherein one of the upper and lower molds has a three-dimensional pattern formed on a molding surface thereof to provide a surface shape of a molded article, and the other mold has a pattern opposite to the three-dimensional pattern on a molding surface thereof.

In accordance with another aspect of the present invention, a method for manufacturing an exterior material for a home appliance includes: (a) preparing a mold according to any one of claims 1 or 2 having a three-dimensional pattern formed on a molding surface thereof; (b) supplying a resin composition for the exterior material to the mold; (c) transferring the three-dimensional pattern of the molding surface to a surface of the exterior material while curing the resin composition; and (d) separating the molded exterior material from the mold.

In accordance with yet another aspect of the present invention, a method for manufacturing an exterior material for a home appliance includes: (a) preparing a mold according to any one of claims 1 or 2 having a three-dimensional pattern formed on a molding surface thereof; (b) providing a resin melt for the exterior material to the mold; (c) transferring the three-dimensional pattern of the molding surface to a surface of the exterior material while solidifying the resin melt; and (d) separating the molded exterior material from the mold.

### [Advantageous Effects]

The mold for forming a three-dimensional pattern according to the present invention has a dual-structure in which an inner mold section is formed of a material such as stainless steel, Teflon, and rubber, thereby facilitating formation of a three-dimensional pattern and separation of a molded article from the mold after molding.

In addition, a frame section formed of a material such as glass or an aluminum honeycomb panel is attached to the mold section to reinforce the mold section, thereby preventing deformation of the inner mold section.

Further, the mold for forming a three-dimensional pattern may employ a thick metallic material in addition to the dual-structure and may have opposite patterns respectively formed on upper and lower molds, thereby minimizing deformation.

Thus, the method for manufacturing an exterior material for a home appliance using the mold according to the present invention may easily form a three-dimensional pattern such as an embossed pattern on the surface of the exterior material.

### [Description of Drawings]

Fig. 1 is a schematic sectional view of a mold for forming a three-dimensional pattern according to one embodiment of the present invention.
Fig. 2 is a flowchart of a method for manufacturing an exterior material for a home appliance according to one embodiment of the present invention.
Fig. 3 is a flowchart of a method for manufacturing an exterior material for a home appliance according to another embodiment of the present invention.
Fig. 4 is a schematic sectional view of a mold for forming a three-dimensional pattern not falling under the scope of the present claims.
Fig. 5 is a schematic sectional view of a mold for forming a three-dimensional pattern not falling under the scope of the present claims.

### [Best Mode]

The above and other aspects, features, and advantages of the invention will become apparent from the detailed description of the following embodiments in conjunction with the accompanying drawings. It should be understood that the present invention is not limited to the following embodiments and may be embodied in different ways, and that the embodiments are provided for complete disclosure and a thorough understanding of the invention to those skilled in the art. The scope of the invention is defined only by the claims.

Like components will be denoted by like reference numerals throughout the specification.

Now, a mold for forming a three-dimensional pattern and a method for manufacturing an exterior material for a home appliance using the same according to embodiments of the present invention will be described in detail with reference to the accompanying drawings.

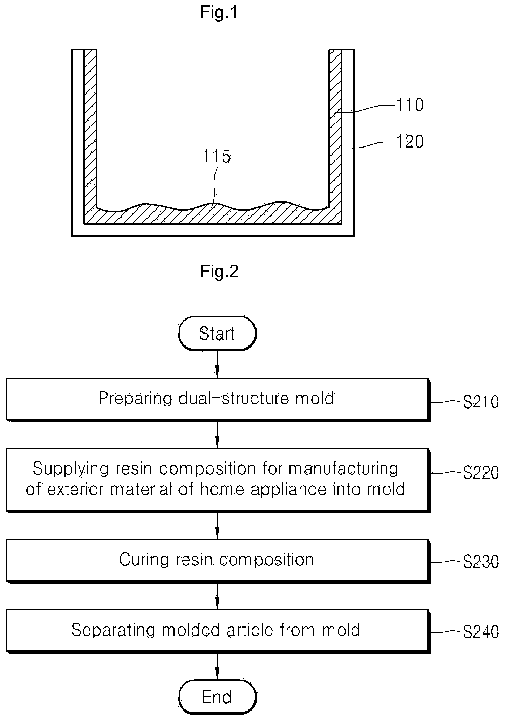

Fig. 1 is a schematic sectional view of a mold for forming a three-dimensional pattern according to one embodiment of the present invention, in which the mold has a dual structure.

Referring to Fig. 1, the mold for forming a three-dimensional pattern includes a mold section 110 and a frame section 120.

The mold section 110 has an inner molding space for receiving a resin composition or a resin melt for manufacturing a molded article, such as an exterior material for a home appliance. The mold section 110 has a three-dimensional pattern 115, such as an embossed pattern, formed on an inner molding surface to provide a surface shape of the molded article.

Due to the three-dimensional pattern on the molding surface of the mold section 110, that is, an inner surface of the mold section 110, a pattern opposite to the three-dimensional pattern on the molding surface of the mold section 110 may be provided to a surface of the molded article after molding.

The mold section 110 may be formed of any material including metals, such as steel, aluminum, and stainless steel; Teflon; rubber, and the like, which allows easy formation of the pattern 115 while allowing the molded article to be easily released from the mold after molding.

In particular, the mold section 110 may be formed of stainless steel having excellent corrosion resistance and strength.

The three-dimensional pattern 115 of the molding surface of the mold section 110 may be formed in various ways, for example, by etching, sculpting, stamping, and the like.

The frame section 120 is attached to an outer surface of the mold section 110 and reinforces the mold section 110. According to the invention, the frame section 120 is formed of a glass material, which has strength against deflection to restrain deformation, or a metal honeycomb panel, such as an aluminium honeycomb panel, which can maintain flatness.

In the mold for forming a three-dimensional pattern according to this embodiment shown in Fig. 1, the interior of the mold is formed of a material, such as metal, which allows easy formation of the pattern 115 while allowing the molded article to be easily released from the mold after molding, and the exterior of the mold is formed of a material, such as glass, which cannot be easily deformed.

In this embodiment, since the interior of the mold is formed of a metallic material, the mold may overcome disadvantages of a glass mold, which neither allows easy formation of a precise three-dimensional pattern nor easy separation of a molded article from the mold after molding.

Also, in this embodiment, since the exterior of the mold is formed of a glass material, the mold may overcome a problem of a metal mold vulnerable to deformation.

Thus, with the mold for forming a three-dimensional pattern according to the present invention, a three-dimensional pattern such as an embossed pattern may be easily formed on the surface of the molded article, such as an exterior material for a home appliance, for example a refrigerator or an air conditioner.

Now, a method for manufacturing an exterior material for a home appliance, such as a refrigerator or air conditioner, using the mold shown in Fig. 1 will be described.

Fig. 2 is a flowchart of a method for manufacturing an exterior material for a home appliance according to one embodiment of the present invention.

Referring to Fig. 2, the method according to this embodiment includes preparing a mold (S210), supplying a resin composition (S220), curing the resin composition (S230), and separating a molded article from the mold (S240).

In operation of preparing a mold S210, a mold for forming a three-dimensional pattern is prepared. As shown in Fig. 1, the mold includes a mold section having a three-dimensional pattern such as an embossed pattern on a molding surface thereof and a frame section attached to an outer surface of the mold section to reinforce the mold section.

The mold section may be formed of a material, such as metal, Teflon, and rubber, and the frame section may be formed of a glass material or metal honeycomb panel.

The three-dimensional pattern of the molding surface of the mold section may be formed through chemical etching, sculpting, stamping, and the like.

In operation of supplying a resin composition S220, a resin composition for an exterior material for a home appliance is supplied into the mold. Here, the resin composition may be in a sol state or in a liquid state.

The resin composition may include at least one selected from among thermosetting resins and photocurable resins, such as acrylic resins, polycarbonate resins, ABS resins, polyurethane resins, olefin resins, epoxy resins, melamine resins, unsaturated polyester resins, and the like. These resins may be used alone or in combination of two or more thereof.

The resin composition may further include additives such as polymerization initiators, crosslinking agents, and antifoaming agents, if necessary.

Examples of polymerization initiators may include benzoyl peroxide, acetyl peroxide, and the like, without being limited thereto. The cross-linking agent may include polyfunctional acrylates such as ethylene glycol di(meth)acrylate (EDMA). The antifoaming agent may include silicone antifoaming agents and other types of antifoaming agents, without being limited thereto.

Meanwhile, pearl, pigments, chips, and the like may be further supplied to the mold in addition to the resin composition. The chips may be provided together with the resin composition, or may be separately provided to the mold before or after the resin composition is supplied to the mold.

Organic or inorganic pigments may be used as the pigments. Dyes may also be used as the pigments.

The chips may be present in an amount of 5 to 100 parts by weight based on 100 parts by weight of the resin composition. If the amount of the chips is less than 5 parts by weight based on 100 parts by weight of the resin composition, an effect of providing an aesthetically pleasing appearance can become insufficient, whereas if the amount of the chips exceeds 100 parts by weight based on 100 parts by weight of the resin composition, some problems such as bending, uneven distribution of chips, and the like can occur.

The chips may be resin chips formed of an acrylic resin, an epoxy resin, or the like, or may be natural chips formed by pulverizing natural stone, nacre, glass, wood flour, or the like. These chips may be used alone or in combination of two or more thereof. Further, the chips may be coloured chips obtained by colouring the resin chips or the natural material chips.

Next, in operation of curing the resin composition S230, the resin composition is cured in the mold.

Curing may be performed in various ways according to the kind of resin. When the resin is a thermosetting resin, the resin composition may be cured by heating the composition at about 50°C, and when the resin is a photocurable resin, the resin composition may be cured by heating the composition by UV irradiation.

In operation of curing the resin composition, the three-dimensional pattern of the molding surface of the mold section is transferred to the surface of a cured article, whereby a pattern corresponding to the three-dimensional pattern is formed on the surface of the cured article.

Of course, drying may be further separately performed before curing of the resin composition.

Finally, in operation of separating a molded article from the mold S240, the cured article manufactured through the curing of the resin composition, that is, an exterior material for a home appliance, is removed from the mold.

In the present invention, the interior of the mold is formed of a material such as stainless steel, so that the mold allows easy separation of the molded article therefrom, as compared with a glass mold in the art.

After separation of the molded article from the mold, silk-screen printing may be further performed for surface treatment of the molded exterior material or to reinforce a design feature.

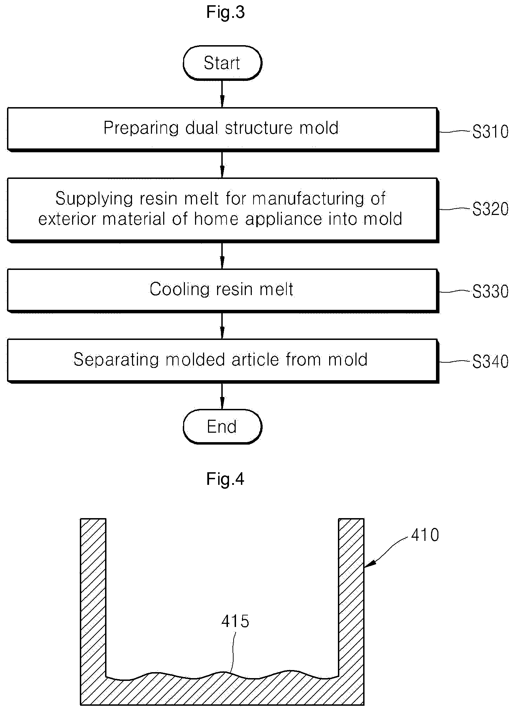

Fig. 3 is a flowchart of a method for manufacturing an exterior material for a home appliance according to another embodiment of the present invention, in which an exterior material for a home appliance is manufactured using a resin melt.

Referring to Fig. 3, the method for manufacturing an exterior material for a home appliance according to this embodiment includes preparing a mold (S310), supplying a resin melt (S320), cooling the resin melt (S330), and separating a molded article from the mold (S340).

In operation of preparing a mold S310, a mold for forming a three-dimensional pattern is prepared. As shown in Fig. 1, the mold includes a mold section having a three-dimensional pattern such as an embossed pattern on a molding surface thereof and a frame section attached to an outer surface of the mold section to reinforce the mold section.

The mold section may be formed of a material, such as metal, Teflon, and rubber, and the frame section may be formed of a glass material or metal honeycomb panel.

The three-dimensional pattern of the molding surface of the mold section may be formed through chemical etching, sculpting, stamping, and the like.

In operation of supplying a resin melt S320, a resin melt for an exterior material for a home appliance is supplied into the mold.

The resin melt may be prepared using acrylic resins, polycarbonate resins, ABS resins, polyurethane resins, olefin resins, epoxy resins, melamine resins, unsaturated polyester resins, and various other resins.

At least one of pearl, pigments, and chips may be further supplied to the mold.

In operation of cooling the resin melt S330, the resin melt supplied into the mold is cooled for solidification of the exterior material. In this operation, the three-dimensional pattern of the molding surface of the mold section is transferred to the solidified exterior material.

In operation of separating a molded article from the mold S340, the mold is separated from the solidified article formed in the resin melt cooling operation S330.

After separation of the molded article from the mold, surface treatment or silk screening may be further performed on the solidified article, that is, on the exterior material for a home appliance, as needed.

Fig. 1 shows the dual-structure mold for forming a three-dimensional pattern and Figs. 2 and 3 show the methods for manufacturing an exterior material for a home appliance using the same. Fig. 4 is a schematic sectional view of a mold for forming a three-dimensional pattern according to an embodiment not falling under the scope of the present claims, in which the mold has a monolithic structure and a large thickness.

Referring to Fig. 4, the mold 410 according to this embodiment has a three-dimensional pattern 415 formed on a molding surface thereof to provide a surface shape of a molded article, and is formed of a metallic material and has a thickness of 3 mm to 20 mm.

In this embodiment, the mold 410 may have a three-dimensional pattern having a fine line width of 0.5 mm or less, and is formed of a metallic material, such as stainless steel, aluminum, and steel, which exhibit adhesion to a suitable resin.

When the mold is formed of a silicone rubber exhibiting low adhesion to resins, the mold can suffer from deterioration of surface gloss due to partial decoloring upon curing of the resin, and when the mold is formed of a material, such as glass, sand-blasting, and the like, which exhibits good adhesion to resins, there is a problem in that a molded article cannot be easily separated from the mold after curing of the resin.

In the present embodiment, the mold 410 may have a thickness of 3 mm to 20 mm. If the thickness of the mold is less than 3 mm, the mold can be deflected. On the contrary, if the thickness of the mold exceeds 20 mm, it is difficult to treat the mold.

For the mold 410 according to the present embodiment, the resin may be an acrylic resin, a urethane resin, a resin for artificial marble such as a mixture of methyl (meth)acrylate (MMA) and aluminum trihydrate (ATH), and the like.

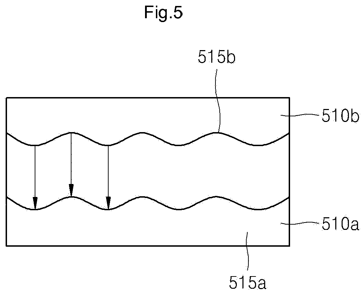

Fig. 5 is a schematic sectional view of a mold for forming a three-dimensional pattern according to a further embodiment not falling under the scope of the present claims. Referring to Fig. 5, the mold for forming a three-dimensional pattern according to this embodiment includes a lower mold 510a and an upper mold 510b.

The lower mold 510a has a three-dimensional pattern 515a formed on a molding surface thereof to provide a surface shape of a molded article. In addition, the upper mold 510b has a pattern 515b formed on a molding surface thereof and opposite to the three-dimensional pattern 515a.

For example, when a concave is formed on the molding surface of the lower mold 510a, a convex is formed on the molding surface of the upper mold 510b corresponding thereto. On the contrary, when a convex is formed on the molding surface of the lower mold 510a, a concave is formed on the molding surface of the upper mold 510b corresponding thereto.

Of course, the upper mold 510b may have the three-dimensional pattern 515b formed on the molding surface thereof to provide a surface shape of a molded article, and the lower mold 510a may have the pattern 515a formed on the molding surface thereof and opposite to the three-dimensional pattern 515b.

The lower mold 510a and the upper mold 510b allow easy formation of a precise three-dimensional pattern, and may be formed of a metallic material, such as stainless steel, aluminum, and steel, which allows easy separation of a molded resin article therefrom after curing of the resin article.

Each of the lower mold 510a and the upper mold 510b may have a thickness of 3 mm to 20 mm. If the thickness of the mold 510a or 510b is less than 3 mm, the mold can be deflected. On the contrary, if the thickness of the mold 510a or 510b exceeds 20 mm, it is difficult to treat the molds.

Further, the mold according to the present embodiment may include a frame section attached to outer surfaces of the upper and lower molds to reinforce the upper and lower molds like the frame section 120 (Fig. 1) shown in Fig. 1. The frame section may be formed of glass, a metal honeycomb panel, or the like.

As in the embodiment shown in Fig. 5, the mold structure including the lower mold 510a and the upper mold 510b having opposite three-dimensional patterns may provide a uniform degree of contraction of a resin article, such as exterior materials for refrigerators, air conditioners, and the like, upon curing of the resin article.

As a result, after curing, the resin article may be prevented from being deformed and void occurrence may be suppressed on the surface or in the interior of the resin article.

As such, when used to manufacture an exterior material for a home appliance such as a refrigerator, air conditioner and the like, the mold for forming a three-dimensional pattern according to the present invention may provide a precise three-dimensional pattern to the exterior material while suppressing deformation of the molded exterior material or void occurrence thereon.

Although some embodiments have been described with reference to the accompanying drawing, it will be understood by those skilled in the art that these embodiments are provided for illustrative purposes only, and various modifications, changes and alterations can be made without departing from the scope of the present invention. Therefore, the scope of the present invention should be defined only by the accompanying claims.

## Claims

1. A mold for forming a three-dimensional pattern, comprising:
a mold section (110) having a three-dimensional pattern (115) formed on a molding surface thereof to provide a surface shape of a molded article; and
a frame section (120) attached to an outer surface of the mold section to reinforce the mold section, **characterized in that** said frame section is formed of glass or a metal honeycomb panel.

2. The mold according to claim 1, wherein the mold section is formed of at least one material of metal, Teflon, and rubber.

3. A method for manufacturing an exterior material for a home appliance, comprising:
(a) preparing the mold according to any one of claims 1 to 2 having a three-dimensional pattern formed on a molding surface thereof;
(b) supplying a resin composition for the exterior material to the mold;
(c) transferring the three-dimensional pattern of the molding surface to a surface of the exterior material while curing the resin composition; and
(d) separating the molded exterior material from the mold.

4. The method according to claim 3, wherein the resin composition is a transparent photocurable resin or a transparent thermosetting resin.

5. The method according to claim 3, wherein, in (b) supplying a resin composition, at least one of pearl, pigments, and chips is further supplied to the mold.

6. The method according to claim 3, further comprising: silk-screen printing on a surface of the cured exterior material after (d) separating the molded exterior material from the mold.

7. The method according to claim 3, wherein the three-dimensional pattern of the molding surface is formed through at least one process of chemical etching, sculpting, and stamping.

8. A method for manufacturing an exterior material for a home appliance, comprising:
(a) preparing the mold according to any one of claims 1 to 2 having a three-dimensional pattern formed on a molding surface thereof;
(b) providing a resin melt for the exterior material to the mold;
(c) transferring the three-dimensional pattern of the molding surface to a surface of the exterior material while solidifying the resin melt; and
(d) separating the molded exterior material from the mold.

9. The method according to claim 8, wherein in (b) supplying a resin composition, at least one of pearl, pigments, and chips is further supplied to the mold.

10. The method according to claim 8, further comprising: silk-screen printing on a surface of the solidified exterior material after (d) separating the molded exterior material from the mold.

11. The method according to claim 8, wherein the three-dimensional pattern of the molding surface is formed through at least one process of chemical etching, sculpting, and stamping.

## Patentansprüche

1. Form zur Bildung eines dreidimensionalen Musters, umfassend:
einen Formabschnitt (110), der ein auf einer Formungsoberfläche davon gebildetes dreidimensionales Muster (115) für die Bereitstellung einer Oberflächenform eines Formteils aufweist; und
einen Rahmenabschnitt (120), der zum Verstärken des Formabschnitts an einer Außenfläche des Formabschnitts befestigt ist, **dadurch gekennzeichnet, dass** der Rahmenabschnitt aus Glas oder einer Metallwabenplatte gebildet ist.

2. Form nach Anspruch 1, wobei der Formabschnitt aus mindestens einem Material aus Metall, Teflon und Gummi gebildet ist.

3. Verfahren zur Herstellung eines Außenmaterials für ein Haushaltsgerät, umfassend:
(a) Vorbereiten der Form nach einem der Ansprüche 1 bis 2, die ein auf einer Formungsoberfläche davon gebildetes dreidimensionales Muster aufweist;
(b) Zuführen einer Harzzusammensetzung für das Außenmaterial zur Form;
(c) Übertragung des dreidimensionalen Musters der Formungsoberfläche auf eine Oberfläche des Außenmaterials während des Härtens der Harzzusammensetzung; und
(d) Trennen des geformten Außenmaterials von der Form.

4. Verfahren nach Anspruch 3, wobei die Harzzusammensetzung ein transparentes lichthärtendes Harz oder ein transparentes thermohärtendes Harz ist.

5. Verfahren nach Anspruch 3, wobei, in (b) Zuführen einer Harzzusammensetzung, mindestens eines aus Perle, Pigmenten und Spänen ferner zur Form zugeführt wird.

6. Verfahren nach Anspruch 3, ferner umfassend: Siebdruck auf eine Oberfläche des ausgehärteten Außenmaterials nach (d) Trennen des geformten Außenmaterials von der Form.

7. Verfahren nach Anspruch 3, wobei das dreidimensionale Muster der Formungsoberfläche unter Anwendung von mindestens einem Prozess von chemischem Ätzen, Modellieren und Prägen gebildet wird.

8. Verfahren zur Herstellung eines Außenmaterials für ein Haushaltsgerät, umfassend:
(a) Vorbereiten der Form nach einem der Ansprüche 1 bis 2, die ein auf einer Formungsoberfläche davon gebildetes dreidimensionales Muster aufweist;
(b) Bereitstellen einer Harzschmelze für das Außenmaterial zur Form;
(c) Übertragung des dreidimensionalen Musters der Formungsoberfläche auf eine Oberfläche des Außenmaterials während des Erstarrens der Harzschmelze; und
(d) Trennen des geformten Außenmaterials von der Form.

9. Verfahren nach Anspruch 8, wobei, in (b) Zuführen einer Harzzusammensetzung, mindestens eines aus Perle, Pigmenten und Spänen ferner zur Form zugeführt wird.

10. Verfahren nach Anspruch 8, ferner umfassend: Siebdruck auf eine Oberfläche des erstarrten Außenmaterials nach (d) Trennen des geformten Außenmaterials von der Form.

11. Verfahren nach Anspruch 8, wobei das dreidimensionale Muster der Formungsoberfläche unter Anwendung von mindestens einem Prozess von chemischem Ätzen, Modellieren und Prägen gebildet wird.

## Revendications

1. Moule destiné à former un motif tridimensionnel, comprenant :
une section de moule (110) ayant un motif tridimensionnel (115) formé sur une surface de moulage de celle-ci pour fournir une forme de surface d'un article moulé ; et
une section de cadre (120) fixée à une surface extérieure de la section de moule pour renforcer la section de moule, **caractérisé en ce que** ladite section de cadre est formée de verre ou d'un panneau en nid d'abeilles métallique.

2. Moule selon la revendication 1, dans lequel la section de moule est formée d'au moins un matériau en métal, en téflon et en caoutchouc.

3. Procédé de fabrication d'un matériau extérieur pour un appareil domestique, comprenant :
(a) la préparation du moule selon l'une quelconque des revendications 1 à 2 ayant un motif tridimensionnel formé sur une surface de moulage de celui-ci ;
(b) la fourniture d'une composition de résine pour le matériau extérieur au moule ;
(c) le transfert du motif tridimensionnel de la surface de moulage à une surface du matériau extérieur tout en durcissant la composition de résine ; et
(d) la séparation du matériau extérieur moulé du moule.

4. Procédé selon la revendication 3, dans lequel la composition de résine est une résine photodurcissable transparente ou une résine thermodurcissable transparente.

5. Procédé selon la revendication 3, dans lequel, dans (b) la fourniture d'une composition de résine, au moins l'un parmi la perle, les pigments et les copeaux est en outre fourni au moule.

6. Procédé selon la revendication 3, comprenant en outre : une sérigraphie sur une surface du matériau extérieur durci après (d) la séparation du matériau extérieur moulé du moule.

7. Procédé selon la revendication 3, dans lequel le motif tridimensionnel de la surface de moulage est formé par au moins un processus de gravure chimique, de sculpture et d'estampage.

8. Procédé de fabrication d'un matériau extérieur pour un appareil domestique, comprenant :
(a) la préparation du moule selon l'une quelconque des revendications 1 à 2 ayant un motif tridimensionnel formé sur une surface de moulage de celui-ci ;
(b) la fourniture d'une masse fondue de résine pour le matériau extérieur au moule ;
(c) le transfert du motif tridimensionnel de la surface de moulage sur une surface du matériau extérieur tout en durcissant la composition de résine ; et
(d) la séparation du matériau extérieur moulé du moule.

9. Procédé selon la revendication 8, dans lequel, dans (b) la fourniture d'une composition de résine, au moins l'un parmi la perle, les pigments et les copeaux est en outre fourni au moule.

10. Procédé selon la revendication 8, comprenant en outre : une sérigraphie sur une surface du matériau extérieur durci après (d) la séparation du matériau extérieur moulé du moule.

11. Procédé selon la revendication 8, dans lequel le motif tridimensionnel de la surface de moulage est formé par au moins un processus de gravure chimique, de sculpture et d'estampage.
